# NEUE EUROPÄISCHE PATENTSCHRIFT

(11) **EP 2 561 311 B2**
(45) Veröffentlichungstag und Bekanntmachung des Hinweises auf die Entscheidung über den Einspruch: **30.12.2020**
(45) Hinweis auf die Patenterteilung: 29.10.2014
(21) Anmeldenummer: 11717500.0
(22) Anmeldetag: 18.04.2011
(51) Int. Cl.: G01B 5/008, G01B 21/04

(54) **BETRIEB EINER KOORDINATENMESSMASCHINE ODER EINER WERKZEUGMASCHINE**
OPERATION OF A COORDINATE MEASURING MACHINE OR A MACHINE TOOL
OPERATION D'UNE MACHINE DE MESURE DE COORDONNÉES OU D'UNE MACHINE OUTIL

(30) Priorität: 20.04.2010 DE 102010015780
(43) Veröffentlichungstag der Anmeldung: 27.02.2013
(73) Patentinhaber: Carl Zeiss Industrielle Messtechnik GmbH, 73447 Oberkochen (DE)
(72) Erfinder: SCHON, Henning, 73431 Aalen (DE); BURGER, Jochen, 89522 Heidenheim (DE); GRUPP, Günter, 89558 Böhmenkirch (DE); RUCK, Otto, 73479 Pfahlheim (DE); AUBELE, Eugen, 89558 Böhmenkirch (DE); BERNHARD, Ralf, 73432 Aalen (DE)
(74) Vertreter: Patentanwälte Bressel und Partner mbB
(86) Internationale Anmeldenummer: PCT/EP2011/002103
(87) Internationale Veröffentlichungsnummer: WO 2011/131375

(56) Entgegenhaltungen:
- WO-A1-95/27930
- DE-A1- 10 229 821
- DE-A1- 10 321 970
- DE-A1- 19 960 191
- US-A1- 2009 055 118
- Klef, Hans B.: "NC/CNC Handbuch 2000", 1999, Carl Hanser Verlag, Munchen pages 68-69,
- Definition des Begriffs 'Kennlinie' aus der Online-Enzyklopädie 'Wikipedia', Stand 16. Januar 2010

## Beschreibung

Die Erfindung betrifft ein Verfahren zum Betreiben einer Koordinatenmessmaschine oder einer Werkzeugmaschine. Die Erfindung betrifft ferner eine solche Maschine.

Derartige Maschinen weisen bewegliche Maschinenteile auf, wobei in vielen Fällen an einem Arm der Maschine (z.B. eine Pinole oder ein horizontal ausgerichteter Arm) ein Werkzeug angeordnet ist. Das Werkzeug kann ein Bearbeitungswerkzeug zum Bearbeiten eines Werkstücks sein (im Fall einer Werkzeugmaschine) oder ein Abtastwerkzeug zum Abtasten der Oberfläche eines Werkzeugs (im Fall einer Koordinatenmessmaschine) sein. Statt dem Begriff Koordinatenmessmaschine wird häufig auch der Begriff Koordinatenmessgerät verwendet. Bei dem Messwerkzeug handelt es sich z.B. um einen Taststift, an dessen freiem Ende ein Tastkörper (z.B. eine Tastkugel) angeordnet ist, mit der die Oberfläche des Werkstücks abgetastet wird. Aus dem Messsystem der Maschine wird in diesem Fall die Position des Tastkörpers ermittelt, an der er die Oberfläche des Werkstücks antastet.

Wenn das Werkzeug auf die Oberfläche des Werkstücks zubewegt wird, können die beweglichen Maschinenteile insbesondere im Bereich des Werkzeugs und der gegebenenfalls dort ebenfalls angeordneten Messsysteme in Schwingungen geraten. Eine mögliche Ursache für die Schwingungen sind die Antriebsmotoren. Eine andere mögliche Ursache ist die Bewegung selbst.

Im Fall der Koordinatenmessmaschine beeinträchtigen die Schwingungen die Messgenauigkeit der Positionsmessung. Es gilt daher, solche Schwingungen möglichst zu vermeiden oder zumindest die Schwingungsamplitude sehr gering zu halten.

Es ist möglich, die Schwingungen und/oder dynamische Größen wie die Geschwindigkeit oder die Beschleunigung des Maschinenteils zu messen und bei Überschreitung eines vorgegebenen Maximalwertes eine Bearbeitung oder Vermessung des Werkstücks nicht durchzuführen. Z.B. lässt sich durch Messung der Beschleunigung als Funktion der Zeit die Schwingungsamplitude bestimmen. Es ist aber auch möglich, die Geschwindigkeit oder die Beschleunigung des Maschinenteils in der Maschinensteuerung zu begrenzen, d.h. die Bewegung die Maschinenteils so zu steuern, dass vorgegebene Maximalwerte für die Geschwindigkeit und/oder die Beschleunigung nicht überschritten werden. Durch Erfahrungen mit Messungen oder Bearbeitungen eines Werkstücks können geeignete Maximalwerte festgelegt werden.

Es besteht ein Interesse daran, Messungen oder Bearbeitung eines Werkstücks in kurzer Zeit auszuführen. Dabei ist auch die Zeit zu berücksichtigen, die für die Bewegung des Werkzeuges zu einem gewünschten Ort an der Oberfläche des Werkstücks benötigt wird. Werden geringe Maximalwerte für die Geschwindigkeit und/oder Beschleunigung vorgegeben, werden entsprechend längere Zeiträume für die Bewegung des Werkzeugs zu dem gewünschten Ort benötigt. Wenn andererseits die Maximalwerte zu hoch gewählt werden, kann es zu Verfälschungen des Messergebnisses oder zu Fehlern bei der Bearbeitung des Werkstücks kommen.

DE 102 29 821 A1 beschreibt ein Verfahren zum Betrieb eines Koordinatenmessgerätes mit einem im Messvolumen des Koordinatenmessgerätes beschleunigbar beweglichen Tastkopf und mit einer Steuereinrichtung, die die Beschleunigung des Tastkopfes in Abhängigkeit der Masse des Tastkopfes auf zulässige Maximalwerte beschränkt. Das Koordinatenmessgerät weist einen beschleunigt beweglichen Tastkopf auf, der einer Taster aufweist, und ein Steuergerät, das die Beschleunigung des Tastkopfes auf zulässige Maximalwerte beschränkt, wobei zulässige Maximalwerte für die Beschleunigung des Tastkopfes als Funktion der Masse des Tasters vorgegeben sind.

DE 199 60 191 A1 beschreibt ein Verfahren zur Sicherung eines Koordinatenmessgeräts vor Bedienfehlern. Das Koordinatenmessgerät weist einen in den Koordinatenrichtungen verfahrbaren Tastkopf und einen an dem Tastkopf auswechselbar befestigten Taststift auf. Aus Kalibrierdaten wird eine Längeninformation des Taststiftes errechnet und diese Längeninformation wird mit einem vorgegebenen Schwellwert verglichen. Bei einem Überschreiten des Schwellwertes wird die Beschleunigung des Taststiftes vermindert. Vorteilhaft wird die Beschleunigung proportional zur Überschreitung des Schwellwertes vermindert. Gemäß einem Ausführungsbeispiel wird die Längeninformation des Taststiftes als der Abstand des Mittelpunkts der betreffenden Tastkugel zum Ankoppelpunkt des Taststiftes am Tastkopf betrachtet.

US 2009/0055118 A1 beschreibt ein Verfahren zum Planen einer Trajektorie eines Maschinenteils, insbesondere eines Tastkopfes, der an einem Koordinatenmessgerät montiert ist. Es wird bestimmt, ob für eine gegebene Trajektorie die Winkelgeschwindigkeit oder Beschleunigung um eine Drehachse einen vorgegebenen Grenzwert überschreitet. Wenn dies der Fall ist, werden Parameter so angepasst, dass die Winkelgeschwindigkeit oder Beschleunigung nicht den Grenzwert überschreitet.

DE 103 21 970 A1 beschreibt eine Bewegungsführung eines bewegbaren Maschinenelements einer numerisch gesteuerten Werkzeug- oder Produktionsmaschine auf einer vorgegebenen Bewegungsbahn eines Maschinenelementes, wobei Stützpunkte im Arbeitsraum der Maschine definiert werden, wobei zu jedem Stützpunkt der maximal mögliche Bahnruck und/oder die maximal mögliche Bahnbeschleunigung und/oder die maximal mögliche Bahngeschwindigkeit des Maschinenelementes bestimmt oder vorgegeben wird und die Bewegung des Maschinenelementes auf der Bewegungsbahn mit dem maximal möglichen Bahnruck und/oder der maximal möglichen Bahnbeschleunigung und/oder der maximal möglichen Bahngeschwindigkeit des Maschinenelementes durchgeführt wird.

Es ist eine Aufgabe der vorliegenden Erfindung, ein Verfahren zum Betreiben einer Koordinatenmessmaschine oder einer Werkzeugmaschine sowie eine solche Maschine anzugeben, die eine kurze Betriebszeit erlauben, ohne die Genauigkeit des Betriebes zu gefährden.

Die beigefügten Patentansprüche definieren den Schutzumfang.

Die Erfindung beruht auf folgenden grundlegenden Überlegungen: Das Schwingungsverhalten des Maschinenteils (z.B. des Bearbeitungswerkzeuges, des Tastwerkzeuges und/oder der Messsysteme) ist nicht nur abhängig von der Dynamik der Bewegung des Maschinenteils, sondern auch abhängig von der Position und/oder Ausrichtung des Maschinenteils. Diese Abhängigkeit ist umso ausgeprägter, je größer der räumliche Bereich ist, in dem der Maschinenteil bewegt werden kann.

Insbesondere im Fall eines Maschinenarmes, an dem das Werkzeug und/oder die Messsysteme angeordnet sind, wobei der Arm aus Sicht einer Abstützung des Armes unterschiedlich weit ausgefahren werden kann, neigt das freie Ende des Armes umso mehr zu Schwingungen, je weiter der Arm ausgefahren ist. Bei dem Arm handelt es sich z.B. um einen mit seiner Längsachse in horizontaler Richtung oder ungefähr in horizontaler Richtung ausgerichteten Arm eines so genannten Horizontalarmgerätes oder aber auch um andere Arme, wie z.B. die Pinole eines Koordinatenmessgerätes in Portalbauweise. Aber auch der Zustand der Aufhängung des Armes kann die Schwingungsanfälligkeit beeinflussen. So ist z.B. die Schwingungsanfälligkeit bei der Pinole auch davon abhängig, an welcher Position des Querträgers, der die Pinole trägt, sich die Pinole befindet.

Es wird daher vorgeschlagen, zumindest für einen dynamischen Parameter (gemäß den Ansprüchen die maximal zulässige Beschleunigung oder der maximal zulässige Ruck, d.h. die dritte zeitliche Ableitung des Ortes bzw. die erste der Beschleunigung) der Maschine oder des Maschinenteils einen Wert vorzugeben, der abhängig von der Ausrichtung und/oder abhängig von der Position des Maschinenteils variiert. Gemäß den Ansprüchen wird eine entsprechende Kennlinie des dynamischen Parameters vorgegeben werden, wobei die Kennlinie die Werte des Parameters als Funktion der Position und/oder der Ausrichtung definiert. Falls die vorgegebenen Werte des Parameters nicht nur von einer Größe (entweder der Position in einer linearen Richtung oder der Ausrichtung des Maschinenteils) abhängig sind, wird statt von einer Kennlinie besser von einem Kennfeld gesprochen.

Es ist bekannt, das dynamische Verhalten eines Koordinatenmessgerätes durch einen in der Steuerung hinterlegten Satz von Parametern vorzugeben. Z.B. sind entsprechende dynamische Parameter, die das Verhalten vorgeben, Maximalwerte für die Geschwindigkeit oder die Beschleunigung eines bestimmten Maschinenteils. Für das Schwingungsverhalten ist insbesondere auch der Ruck von besonderer Bedeutung. Daher wird es bevorzugt, dass für den Ruck ein Maximalwert vorgegeben wird, der mit der Position und/oder Ausrichtung des Maschinenteils variiert, wobei dieser Maximalwert von der Steuerung beachtet wird, d.h. die Steuerung führt die Bewegung des Maschinenteils so aus, dass der jeweils für die Position und/oder Ausrichtung des Maschinenteils vorgegebene Maximalwert nicht überschritten wird.

Im Unterschied zu einem global, für den gesamten Bewegungsbereich und Bereich der möglichen Ausrichtungen des Maschinenteils vorgegebenen Maximalwert, ermöglicht es die Erfindung, in schwingungsunkritischen Bereichen oder in weniger schwingungsanfälligen Bereichen der Position und/oder Ausrichtung des Maschinenteils höhere Werte des jeweiligen dynamischen Parameters vorzugeben. Daher kann in diesen Bereichen mit höheren Geschwindigkeiten des Maschinenteils gearbeitet werden und kann die höhere Geschwindigkeit länger beibehalten werden bzw. später auf geringere Geschwindigkeiten reduziert werden. Insbesondere ist es bei einer Begrenzung des Ruckes auf vorgegebene Maximalwerte möglich, die Geschwindigkeit bis kurz vor dem Berühren des Werkstücks durch das Werkzeug beizubehalten, hohe negative Beschleunigungen auszuführen und dennoch die Maximalwerte des Ruckes nicht zu überschreiten. Da der Ruck die für die Schwingungsanregung bei solchen Bewegungsvorgängen wesentlichste Einflussgröße ist, werden starke Schwingungen dennoch vermieden.

Diese Grundidee der Erfindung kann verallgemeinert werden und nicht nur auf dynamische Parameter der Maschine angewendet werden. Insbesondere kann der Maximalwert des Parameters oder der Parameter nicht nur von der Position und/oder Ausrichtung des Maschinenteils abhängen, sondern von zumindest einer anderen Zustandsgröße, wie z.B. der Umgebungstemperatur, der Art und/oder dem Gewicht des Werkzeugs und/oder der Messsysteme.

Insbesondere wird Folgendes vorgeschlagen: Ein Verfahren zum Betreiben einer Koordinatenmessmaschine oder einer Werkzeugmaschine, wobei eine Bewegung eines Maschinenteils derart gesteuert wird, dass bei der Bewegung des Maschinenteils eine vorgegebene maximale Beschleunigung und/oder ein vorgegebener maximaler Ruck nicht überschritten wird, wobei die maximale Beschleunigung und/oder der maximale Ruck abhängig von der Position des Maschinenteils und/oder abhängig von der Ausrichtung des Maschinenteils variiert.

Ein Beispiel für eine variable Ausrichtung des Maschinenteils ist ein Taststift eines Koordinatenmessgerätes, der an einem Gelenk angebracht ist, so dass die Ausrichtung der Längsachse des Taststiftes verändert werden kann. Ein anderes Beispiel ist ein Maschinenarm, der an seinem freien Ende das Werkzeug und/oder die Messsysteme trägt und dessen Längsachse unterschiedlich ausgerichtet werden kann.

Insbesondere kann der Maschinenteil von einer Abstützung des Maschinenteils aus gesehen in unterschiedlicher Entfernung positionierbar sein, wobei die maximale Beschleunigung und/oder der maximale Ruck so vorgegeben wird, dass sie/er abhängig von der Entfernung variiert, z. B. mit zunehmender Entfernung abnimmt. In diesen Fällen ist die Entfernung des Maschinenteils von der Abstützung die Position, von der der Maximalwert des dynamischen Parameters (z.B. Beschleunigung und/oder Ruck) abhängig ist.

Generell gilt, dass der Maximalwert der dynamischen Größe, gemäß den Ansprüchen zulässige Beschleunigung oder zulässiger Ruck, so vorgegeben werden kann, dass er bei zunehmender Schwingungsanfälligkeit abnimmt und umgekehrt. In vielen Fällen ist der Maschinenteil und/oder die Maschine umso schwingungsanfälliger, je größer die Entfernung ist. Es gibt jedoch auch Maschinen, bei denen die Schwingungsanfälligkeit zumindest in Teilbereichen der Entfernung mit zunehmender Entfernung abnimmt. Nachdem ein Minimum der Schwingungsanfälligkeit erreicht ist, kann die Schwingungsanfälligkeit wieder zunehmen. Ein Beispiel ist ein Koordinatenmessgerät in Portalbauweise, bei dem die Pinole an ihrem unteren Ende die Messsysteme und den Taster trägt. Ist die Pinole in ihrer höchsten Position, das heißt nicht nach unten ausgefahren, ragt ein erheblicher Teil der Pinole über den Querträger nach oben hinaus. Daher ist die Pinole bei geringster Entfernung der Messsysteme und des Tasters von der Aufhängung bzw. Abstützung an dem Querträger schwingungsanfällig. Wird die Pinole nun nach unten ausgefahren, nimmt die Schwingungsanfälligkeit zunächst ab, bis die Pinole bezogen auf ihre Abstützung am Querträger etwa gleich weit nach oben und unten ragt. Mit weiterem Ausfahren nach unten nimmt die Schwingungsanfälligkeit wieder zu.

Besonders von Vorteil ist das Verfahren, wenn die Bewegung eine Bewegung ist, bei der der Maschinenteil einem Werkstück angenähert wird, um das Werkstück zu kontaktieren, wobei die Bewegung eine Bewegungsphase aufweist, bei der die Geschwindigkeit des Maschinenteils abnimmt. Ein Beispiel für eine solche Bewegung wurde oben erläutert. Ist die Beschleunigung (insbesondere hinsichtlich ihres Betrages) während der Bremsphase begrenzt und/oder ist der Ruck (insbesondere hinsichtlich seines Betrages) begrenzt, können bei einer solchen Bewegung Schwingungen wirksam vermieden werden. Eine solche Bewegungsphase ist für die Genauigkeit des Betriebes der Maschine besonders wichtig, da während der Bremsphase erzeugte Schwingungen noch andauern können, bis der Kontakt zu dem Werkstück hergestellt ist. Auch kann die korrekte Position, an der das Werkstück kontaktiert werden soll, möglicherweise nicht erreicht oder nur ungenau erreicht werden, wenn die Schwingungen noch andauern.

Es wird ferner eine Koordinatenmessmaschine oder Werkzeugmaschine vorgeschlagen, die ein bewegliches Maschinenteil und eine Steuerung aufweist, wobei die Steuerung ausgestaltet ist, eine Bewegung des Maschinenteils derart zu steuern, dass bei der Bewegung des Maschinenteils eine vorgegebene maximale Beschleunigung und/oder ein vorgegebener maximaler Ruck nicht überschritten wird, wobei die maximale Beschleunigung und/oder der maximale Ruck abhängig von der Position des Maschinenteils und/oder abhängig von der Ausrichtung des Maschinenteils variiert.

Auf die Vorteile und speziellen Ausgestaltungen der Maschine wird hier nicht näher eingegangen. Die Vorteile und Ausgestaltungen entsprechen den Vorteilen und Ausgestaltungen des Verfahrens, wie es in dieser Beschreibung beschrieben wird.

Ausführungsbeispiele der Erfindung werden nun unter Bezugnahme auf die beigefügte Zeichnung beschrieben. Die einzelnen Figuren der Zeichnung zeigen:
- Fig. 1: schematisch ein Koordinatenmessgerät in Portalbauweise mit einer Steuerung, die die Bewegung von Maschinenteilen des Gerätes steuert,
- Fig. 2: eine Phase eines Bewegungsprozesses eines Taststiftes beim Annähern des Taststiftes an ein Werkstück,
- Fig. 3: schematisch eine Anordnung mit einem Horizontalarm-Koordinatenmessgerät und einem Werkstück,
- Fig. 4: die Anordnung gemäß Fig. 3, wobei sich jedoch das Werkstück in größerer Entfernung zu einer feststehenden Basis des Koordinatenmessgeräts befindet und daher der Horizontalarm weiter ausgefahren ist, und
- Fig. 5: eine Kennlinie, die den Wert eines Parameters als Funktion der Position eines Maschinenteils zeigt.

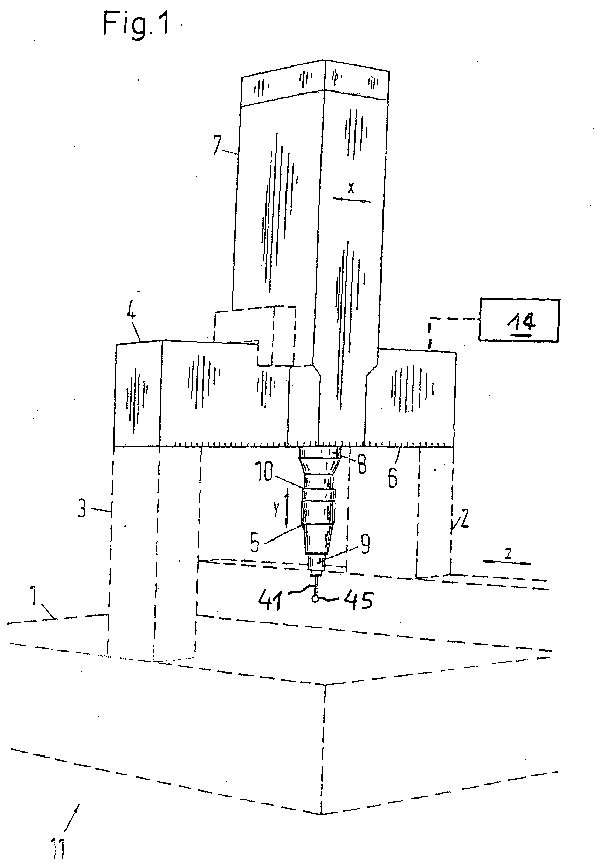

Das in Fig. 1 dargestellte Koordinatenmessgerät 11 ist vom Typ der Portalbauweise. Das Portal wird durch zwei nach oben aufragende Stützen 2, 3 und durch einen Querträger 4 gebildet, der an seinen gegenüberliegenden Enden auf den Stützen 2, 3 ruht. Die Stützen 2, 3 sind in z-Richtung auf einem Messtisch 1 des Gerätes verfahrbar. Ferner weist das Gerät 11 eine Pinole 7 auf, die in x-Richtung entlang der Längsachse des Querträgers 4 verfahrbar ist. Eine Halterung 8 der Pinole 7 trägt am unteren Ende der Pinole 7 einen Sensor 5, der über eine lösbare Kupplung 10 mit dem Träger 8 verbunden ist. Der Sensor 5 enthält die Messsysteme des Gerätes, mit denen eine Auslenkung eines Taststifts 41 messbar ist, wenn dieser mit seiner am unteren freien Ende angeordneten Tastkugel 45 ein Werkstück antastet. Der Träger 8 mit den daran befestigten Teilen 5, 41 ist in y-Richtung verfahrbar, wobei die z-Richtung, die x-Richtung und y-Richtung paarweise senkrecht aufeinander stehen, so dass sie die Koordinatenachsen eines kartesischen Koordinatensystems definieren.

Stellvertretend für weitere mögliche Skalen ist eine Skala 6 an dem Querträger 4 in x-Richtung verlaufend angeordnet, so dass abhängig von der Position der Pinole 7 ein jeweils zugeordneter Messwert auf der Skala 6 automatisch abgelesen werden kann.

Die Steuerung 14 des Gerätes 11, die die Bewegungen der verschiedenen Maschinenteile des Geräts 11 in z-Richtung, y-Richtung und x-Richtung steuert, ist rechts oben in der Fig. 1 durch ein Rechteck dargestellt. Insbesondere ist die Steuerung 14 ausgestaltet, bei der Bewegung des Taststifts 41 die Vorgaben zu beachten, die durch Vorgabe von positionsabhängigen Maximalwerten der dynamischen Größen des Geräts vorgegeben sind.

Insbesondere kann die Steuerung 14 oder die Steuerung eines anderen Koordinatenmessgeräts oder einer Werkzeugmaschine die entsprechenden Vorgaben für die Maximalwerte der Parameter aus einer computerlesbaren Datei einlesen. In dieser Datei wird für jeden vom Betriebszustand (insbesondere der Position und/oder Ausrichtung des Werkzeugs) abhängigen Parameter eine Kennlinie und/oder ein Kennfeld gespeichert. Die in der Kennlinie und/oder dem Kennfeld enthaltenen Parameterwerte sind dabei abhängig von der jeweiligen Zustandsgröße, insbesondere der Position und/oder Ausrichtung des Werkzeugs und/oder der Messsysteme. Z.B. ist es möglich, den jeweiligen in einem bestimmten Zustand gültigen Wert des Parameters als Anpassungsfaktor zur Multiplikation mit einem unveränderlichen Wert des Parameters zu multiplizieren. In diesem Fall enthält die Kennlinie bzw. das Kennfeld nicht unmittelbar den Maximalwert der dynamischen Größe (z.B. Beschleunigung oder Ruck), sondern lediglich den Faktor zur Anpassung eines vorgegebenen, festen Parameter-Wertes.

Beispielsweise kann durch die Vorgabe von Stützstellen (z.B. Positionen entlang einer Bewegungsachse des Maschinenteils) und von zugehörigen Anpassungsfaktoren eine stückweise lineare Kennlinie definiert werden. Durch lineare Interpolation zwischen den jeweils beiden nächstgelegenen Stützstellen wird in Abhängigkeit der Zustandsgröße (z.B. der Position bezüglich der Achse) für den betreffenden Parameter der zustandsabhängige Anpassungsfaktor ermittelt, so dass sich der Parameterwert insbesondere stetig (d.h. stufenlos) abhängig vom Zustand ändern kann. Sind für einen Parameter Abhängigkeiten von mehr als einer Zustandsgröße definiert, so wird durch einen geeigneten Algorithmus aus den einzelnen Anpassungsfaktoren, die sich aus den jeweiligen Kennlinien ergeben, ein Gesamtanpassungsfaktor zur Multiplikation mit dem vorgegebenen, festen Wert des Parameters ermittelt. Es ist jedoch auch möglich, insbesondere bei dynamischen Parametern wie der Beschleunigung und dem Ruck, aus den verschiedenen Kennlinien jeweils einen für den Zustand gültigen Anpassungsfaktor zu ermitteln und den vorgegebenen, festen Wert des Parameters lediglich mit demjenigen Faktor zu multiplizieren, der die stärkste Reduktion des vorgegebenen, festen Wertes bewirkt.

Zur Vorbereitung des Betriebes einer Maschine können experimentell für verschiedene Zustände der Maschine die jeweiligen Parameterwerte ermittelt werden, so dass sich ein bestimmtes, gewünschtes Verhalten der Maschine ergibt. Diese so ermittelten Parameterwerte können z.B. als die oben erwähnten Stützstellen für die Kennlinien verwendet werden. Auf diese Weise wird die Steuerung der Maschine eingestellt. Z.B. kann bei der Einrichtung eines Koordinatenmessgerätes der Benutzer für einzelne Positionen eines Tastkopfes durch Experimente jeweils einen Grenzwert oder mehrere Grenzwerte für die dynamischen Parameter (insbesondere Maximalwert der Beschleunigung und Maximalwert des Ruckes) so ermitteln, dass an diesen Positionen die gewünschte Messgenauigkeit bei möglichst kurzer Messzeit erreicht wird. Die so ermittelten Paare aus Position des Tastkopfes und zugehörigem Parameterwert können dann eine Wertetabelle definieren, die einer entsprechenden Parameterkennlinie entspricht. Diese der Kennlinie oder den Kennlinien entsprechenden Daten werden in einer oder mehreren Dateien gespeichert, auf die die Steuerung der Maschine zugreifen kann. Wie erwähnt, können die Parameterwerte für andere als die experimentell ermittelten Positionen durch Interpolation, insbesondere lineare Interpolation, ermittelt werden. Es können jedoch auch andere funktionale Zusammenhänge zwischen der jeweiligen Zustandsgröße oder den jeweiligen Zustandsgrößen und den Parametern definiert werden, wobei die Steuerung während des Betriebs der Maschine dann gemäß dem funktionalen Zusammenhang den jeweils für einen Betriebszustand gültigen Parameterwert ermittelt.

Um die manuelle Festlegung zumindest von Stützstellen von Parameterkennlinien über eine Tastatur zu verkürzen oder sogar zu vermeiden, kann die Parameterkennlinie oder können die Parameterkennlinien z.B. mittels einer grafischen Benutzeroberfläche eines Computers und mit Hilfe eines Eingabegerätes (wie z.B. einer Computermaus) festgelegt und/oder geändert werden. Dadurch wird Zeit gespart, werden Fehler vermieden und kann der Benutzer die Eingabe vornehmen, während er bereits eine Darstellung der Kennlinie sieht. Die Eingabe von Parameterwerten ist jedoch auch manuell, z.B. unter Verwendung einer Tastatur, möglich.

Während des Betriebes der Maschine berechnet die Steuerung (z.B. mittels entsprechender Steuerungssoftware) abhängig von dem momentanen Betriebszustand (der Zustand wird insbesondere durch die Position und/oder Ausrichtung des Werkzeugs und/oder der Messsysteme definiert) den jeweiligen Parameterwert oder die jeweiligen Parameterwerte. Dabei kann die Steuerung eines der zuvor beschriebenen Verfahren (z.B. lineare Interpolation) ausführen.

Vorteil der experimentellen Festlegung der Parameterwerte, insbesondere wenn Stützstellen für Kennlinien oder Kennfelder festgelegt werden, ist, dass das Verhalten der Maschine auf einfache Weise angepasst bzw. festgelegt werden kann. Z.B. können auch bereits existierende Parametersätze auf einfache Weise verändert und dadurch optimiert werden. Die Festlegung über Stützstellen vereinfacht den Vorgang der Festlegung, da bereits relativ wenige Stützstellen ausreichen.

Bei der Bewegungssteuerung reicht es häufig nicht aus, die für einen bestimmten Zustand gültigen Parameterwerte erst zu bestimmen, wenn der Zustand bereits erreicht ist. Es wird daher bevorzugt, dass der Bewegungsablauf vorausgeplant wird und für den geplanten Bewegungsablauf im Voraus die jeweils gültigen Parameterwerte ermittelt werden. Dabei kann die Bewegungsplanung zunächst ohne Beachtung der Parameterwerte (wie z.B. Maximalwert der Beschleunigung und/oder des Ruckes) durchgeführt werden und kann die geplante Bewegung danach, aber noch vor Ausführung der Bewegung, daraufhin überprüft werden, ob die durch die Parameter vorgegebenen Bedingungen eingehalten werden. Wenn die Bedingungen nicht eingehalten werden, kann die Bewegungsplanung angepasst werden, so dass die Bedingungen eingehalten werden. Es ist aber auch möglich, bereits bei der ersten Bewegungsplanung die Parameterwerte zu berücksichtigen.

In vielen Betriebssituationen ist eine genaue Bewegungsplanung vor Ausführung der Bewegung wichtig. Z.B. kann ein kleiner Maximalwert für den Betrag der Beschleunigung dazu führen, dass der Bremsweg einer Bewegung des Maschinenteils länger als erwartet ist. Dies könnte zum harten Anschlagen des Maschinenteils z.B. an dem zu bearbeitenden oder zu vermessenden Werkstück führen.

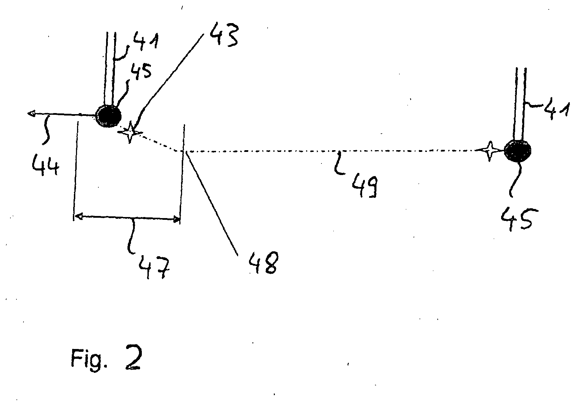

Fig. 2 zeigt einen Taststift 41 mit einer Tastkugel 45 am unteren freien Ende des Taststiftes 41, wobei es sich z.B. um den Taststift gemäß Fig. 1 oder Fig. 3 und 4 handeln kann. Der Taststift 41 wird mit seiner Tastkugel 45 entlang dem Verfahrweg 49 verfahren. Bis zu der Position 48 entlang dem Verfahrweg 49 wird die Tastkugel 45 mit konstanter, hoher Geschwindigkeit verfahren. Ab der Position 48 beginnt eine Phase der Bewegung, bei der die Tastkugel 45 abgebremst wird. Durch einen Doppelpfeil 47 ist ein örtlicher Bereich markiert, in dem noch keine Berührung der Tastkugel 45 mit einem Werkstück erwartet wird. In Richtung des Pfeils 44 jedoch kann sich aus Sicht der Position 48 hinter dem Bereich 47 ein Werkstück befinden. Daher wird die Bewegung der Tastkugel 45 in dem Bereich 47 abgebremst. Der mit einem Stern 43 bezeichnete Punkt auf dem Verfahrweg 49 markiert den Ort, an dem die Verzögerung (negative Beschleunigung) hinsichtlich ihres Betrages am schnellsten geändert wird, d.h. an dem der Ruck hinsichtlich seines Betrages den Maximalwert erreicht. In vielen Fällen ist der Ruck dafür entscheidend, ob und mit welcher Amplitude mechanische Schwingungen angeregt werden.

Die Bremsphase kann jedoch auch anders gesteuert werden und dadurch anders ausgeführt werden. Da sich aus Sicht der Position 48 jenseits des Bereichs 47 ein Werkstück befinden kann, kann bereits unmittelbar beim Erreichen des Bereichs 47 mit dem größtmöglich erlaubten Ruck gebremst werden. In diesem Fall könnte der Punkt 43 auf dem Verfahrweg 49 z.B. denjenigen Punkt markieren, bei dem ein sehr kleiner Maximalwert für den Ruck vorgegeben ist, der wesentlich kleiner ist als der Maximalwert des Ruckes, der für den Punkt 48 auf dem Verfahrweg 49 gilt. Dies bedeutet, dass der Maximalwert des Ruckes vorzugsweise kontinuierlich mit Eintritt in den Bereich 47 reduziert wird. Sollten bei Eintritt in den Bereich 47 noch Schwingungen angeregt werden, so können diese zumindest teilweise noch während der Bewegung in dem Bereich 47 abklingen. Hinzu kommt, dass die Entfernung des Taststiftes 41 von einer Abstützung des Maschinenarmes, der den Taststift trägt, in vielen Fällen mit Annäherung an das Werkstück vergrößert. Auch aus diesem Grund sollte der vorgegebene Maximalwert für den Ruck im Verlauf des Verfahrweges 49 abnehmen.

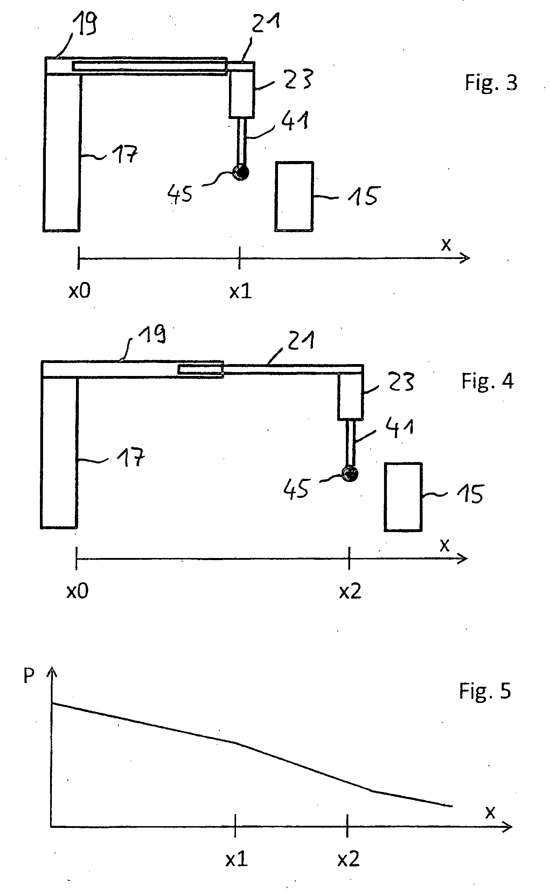

Fig. 3 zeigt ein Koordinatenmessgerät der Horizontalarm-Bauweise. Eine feststehende Basis 17 des Gerätes trägt einen Horizontalarm, der ein Trägerelement 19 und ein bezüglich dem Trägerelement 19 teleskopierbares Element 21 aufweist. Fig. 4 zeigt eine im Vergleich zu Fig. 3 ausgefahrene Stellung des Elements 21. An dem Element 21 ist das Messsystem 23 befestigt, an welchem wiederum der Taststift 41 mit seiner Tastkugel 45 befestigt ist. Dabei kann der Taststift 41 gegenüber dem Messsystem 23 auslenkbar sein, so dass er beim Kontaktieren des Werkstücks 15 ausgelenkt wird.

Unten in Fig. 3 und in Fig. 4 ist die Verfahrachse dargestellt, deren Positionsvariable mit x bezeichnet ist. Ein Bezugspunkt der Verfahrachse (links in Fig. 3 und Fig. 4) ist mit x0 bezeichnet. Die Position der Tastkugel 45 in dem in Fig. 3 dargestellten Zustand ist mit x1 bezeichnet. Die ausgefahrene Position der Tastkugel 45 in der Fig. 4 ist mit x2 bezeichnet.

Fig. 5 zeigt eine Parameterkennlinie. Die Zustandsgröße ist wiederum die Position des Werkzeugs, z.B. der Tastkugel 45 aus Fig. 3 und Fig. 4, entlang einer Bewegungsachse des Werkzeugs. Der Parameter P kann z.B. der Maximalwert der Beschleunigung oder des Ruckes sein, der bei einer Bewegung des Werkzeugs zulässig ist. Ist die Kennlinie gemäß Fig. 5 auf die in Fig. 3 und Fig. 4 dargestellten Situationen bezogen, ergibt sich mit fortschreitendem Ausfahren des teleskopierbaren Elements 21 und damit des Taststifts 41 mit seiner Tastkugel 45 eine Abnahme des Parameterwertes. Z.B. im Fall, dass es sich bei dem Parameter P um den Maximalwert des Ruckes handelt, nimmt der Parameterwert mit dem Ausfahren des teleskopierbaren Elements 21 ab. Wird eine Vorausplanung des Antastens des Werkstücks 15 z.B. in der in Fig. 4 dargestellten Lage des Werkstücks 15 vorausgeplant, wobei das teleskopierbare Element 21 ausgefahren wird, muss ähnlich wie anhand von Fig. 2 erläutert rechtzeitig bei großen zulässigen Ruck-Werten mit dem Bremsvorgang begonnen werden. Dadurch werden Schwingungen, die das Messsystem 23 ungenau messen lassen würden, vermieden.

Insgesamt, nicht nur bezogen auf die anhand der Figuren beschriebenen Ausführungsbeispiele, wird mit der Erfindung in Betriebszuständen mit erhöhter Schwingungsanfälligkeit vermieden, dass ungenaue Messergebnisse einer Koordinatenmessmaschine erzielt werden oder dass unerwünschte oder ungenaue Werkstückbearbeitungen durch eine Werkzeugmaschine stattfinden. In Bereichen geringer Schwingungsanfälligkeit wird die Bewegung des jeweiligen Maschinenteils mit hoher Dynamik ausgeführt, d.h. es werden hohe Beschleunigungen und/oder hohe Rucke zugelassen. In Bereichen höherer Schwingungsanfälligkeit wird die Dynamik reduziert, d.h. es werden geringere Beschleunigungen und/oder Rucke zugelassen. Auf diese Weise können die Bewegungen der schwingungsanfälligen Maschinenteile in optimaler, kürzestmöglicher Zeit ausgeführt werden.

## Patentansprüche

1. Verfahren zum Betreiben einer Koordinatenmessmaschine (11) oder einer Werkzeugmaschine, wobei eine Bewegung eines Maschinenteils (41) derart gesteuert wird, dass bei der Bewegung des Maschinenteils (41) eine vorgegebene maximale Beschleunigung und/oder ein vorgegebener maximaler Ruck (P) nicht überschritten wird, wobei die maximale Beschleunigung und/oder der maximale Ruck abhängig von der Position des Maschinenteils (41) und/oder abhängig von der Ausrichtung des Maschinenteils innerhalb des räumlichen Bereichs, in dem der Maschinenteil (41) bewegt werden kann, variiert, nämlich entsprechend einer vorgegebenen Kennlinie oder eines vorgegebenen Kennfeldes der maximalen Beschleunigung und/oder des maximalen Rucks, und wobei die Kennlinie oder das Kennfeld die Werte der maximalen Beschleunigung und/oder des maximalen Rucks als Funktion der Position und/oder der Ausrichtung des Maschinenteils (41) definiert, wobei für die maximale Beschleunigung und/oder den maximalen Ruck (P) in Teilbereichen des räumlichen Bereichs mit höherer Schwingungsanfälligkeit des Maschinenteils (41) kleinere Werte vorgegeben werden als in Teilbereichen des räumlichen Bereichs mit geringerer Schwingungsanfälligkeit des Maschinenteils (41).

2. Verfahren nach dem vorhergehenden Anspruch, wobei der Maschinenteil (41) von einer Abstützung (17) des Maschinenteils (41) aus gesehen in unterschiedlicher Entfernung (x) positionierbar ist und wobei die maximale Beschleunigung und/oder der maximale Ruck so vorgegeben ist, dass sie/er abhängig von der Entfernung variiert.

3. Verfahren nach einem der vorhergehenden Ansprüche, wobei die Bewegung eine Bewegung ist, bei der der Maschinenteil (41) einem Werkstück (15) angenähert wird, um das Werkstück (15) zu kontaktieren, wobei die Bewegung eine Bewegungsphase aufweist, bei der die Geschwindigkeit des Maschinenteils (41) abnimmt.

4. Koordinatenmessmaschine (11) oder Werkzeugmaschine, mit einem beweglichen Maschinenteil (41) und mit einer Steuerung (14), die ausgestaltet ist, eine Bewegung des Maschinenteils (41) derart zu steuern, dass bei der Bewegung des Maschinenteils (41) eine vorgegebene maximale Beschleunigung und/oder ein vorgegebener maximaler Ruck nicht überschritten wird, wobei die maximale Beschleunigung und/oder der maximale Ruck abhängig von der Position des Maschinenteils (41) und/oder abhängig von der Ausrichtung des Maschinenteils innerhalb des räumlichen Bereichs, in dem der Maschinenteil (41) bewegt werden kann, variiert, nämlich entsprechend einer vorgegebenen Kennlinie oder eines vorgegebenen Kennfeldes der maximalen Beschleunigung und/oder des maximalen Rucks, und wobei die Kennlinie oder das Kennfeld die Werte der maximalen Beschleunigung und/oder des maximalen Rucks als Funktion der Position und/oder der Ausrichtung des Maschinenteils (41) definiert,
wobei für die maximale Beschleunigung und/oder den maximalen Ruck (P) in Teilbereichen des räumlichen Bereichs mit höherer Schwingungsanfälligkeit des Maschinenteils (41) kleinere Werte vorgegeben werden als in Teilbereichen des räumlichen Bereichs mit geringerer Schwingungsanfälligkeit des Maschinenteils (41).

5. Maschine nach dem vorhergehenden Anspruch, wobei der Maschinenteil (41) von einer Abstützung (17) des Maschinenteils (41) aus gesehen in unterschiedlicher Entfernung (x) positionierbar ist und wobei die maximale Beschleunigung und/oder der maximale Ruck so vorgegeben ist, dass sie/er abhängig von der Entfernung variiert.

6. Maschine nach einem der beiden vorhergehenden Ansprüche, wobei die Bewegung eine Bewegung ist, bei der der Maschinenteil (41) einem Werkstück (15) angenähert wird, um das Werkstück (15) zu kontaktieren, und wobei die Steuerung (14) derart ausgestaltet ist, dass die Bewegung eine Bewegungsphase aufweist, bei der die Geschwindigkeit des Maschinenteils (41) abnimmt.

## Claims

1. Method for operating a coordinate measuring machine (11) or a machine tool, wherein a movement of a machine part (41) is controlled in such a manner that during the movement of the machine part (41) a predetermined maximum acceleration and/or a predetermined maximum jerk (P) is not exceeded, wherein the maximum acceleration and/or the maximum jerk varies, within the spatial region in which the machine part (41) can be moved, in dependence on the position of the machine part (41) and/or in dependence on the alignment of the machine part, namely according to a predetermined characteristic line or a predetermined characteristic field of the maximum acceleration and/or the maximum jerk, and wherein the characteristic line or the characteristic field defines the values of the maximum acceleration and/or of the maximum jerk as a function of the position and/or of the alignment of the machine part (41), wherein, for the maximum acceleration and/or the maximum jerk (P), smaller values are predetermined in subregions of the spatial region with a higher oscillation susceptibility of the machine part (41) than in subregions of the spatial region with a lower oscillation susceptibility of the machine part (41) .

2. Method according to the preceding claim, wherein the machine part (41), when seen from a support (17) of the machine part (41), is positionable at a different distance (x) and wherein the maximum acceleration and/or the maximum jerk is predetermined such that it varies in dependence on the distance.

3. Method according to either of the preceding claims, wherein the movement is a movement in which the machine part (41) is moved closer to a workpiece (15) in order to contact the workpiece (15), wherein the movement has a movement phase in which the speed of the machine part (41) distance.

4. Coordinate measuring machine (11) or machine tool, having a movable machine part (41) and having a control device (14) which is adapted to control a movement of the machine part (41) in such a manner that during the movement of the machine part (41) a predetermined maximum acceleration and/or a predetermined maximum jerk is not exceeded, wherein the maximum acceleration and/or the maximum jerk varies, within the spatial region in which the machine part (41) can be moved, in dependence on the position of the machine part (41) and/or in dependence on the alignment of the machine part, namely according to a predetermined characteristic line or a predetermined characteristic field of the maximum acceleration and/or the maximum jerk, and wherein the characteristic line or the characteristic field defines the values of the maximum acceleration and/or of the maximum jerk as a function of the position and/or of the alignment of the machine part (41), wherein, for the maximum acceleration and/or the maximum jerk (P), smaller values are predetermined in subregions of the spatial region with a higher oscillation susceptibility of the machine part (41) than in subregions of the spatial region with a lower oscillation susceptibility of the machine part (41) .

5. Machine according to the preceding claim, wherein the machine part (41), when seen from a support (17) of the machine part (41), is positionable at a different distance (x) and wherein the maximum acceleration and/or the maximum jerk is predetermined such that it varies in dependence on the distance.

6. Machine according to either of the two preceding claims, wherein the movement is a movement in which the machine part (41) is moved closer to a workpiece (15) in order to contact the workpiece (15), and wherein the control device (14) is adapted in such a manner that the movement has a movement phase in which the speed of the machine part (41) decreases.

## Revendications

1. Procédé pour faire fonctionner une machine de mesure de coordonnées (11) ou une machine-outil, un mouvement d'une partie de machine (41) étant commandé de manière à ce que, lors du mouvement de la partie de machine (41), une accélération maximale prédéterminée et/ou une saccade maximale prédéterminée (P) ne soi(en)t pas dépassée(s), l'accélération maximale et/ou la saccade maximale variant en fonction de la position de la partie de machine (41) et/ou en fonction de l'orientation de la partie de machine à l'intérieur de la zone spatiale dans laquelle il est possible de faire bouger la partie de machine (41), à savoir de manière correspondant à une ligne caractéristique prédéterminée ou à un champ caractéristique prédéterminé de l'accélération maximale et/ou de la saccade maximale, et la ligne caractéristique ou le champ caractéristique définissant les valeurs de l'accélération maximale et/ou de la saccade maximale en tant que fonction de la position et/ou de l'orientation de la partie de machine (41), où, pour l'accélération maximale et/ou la saccade maximale (P) dans des zones partielles de la zone spatiale ayant une susceptibilité plus importante aux oscillations de la partie de machine (41), des valeurs plus petites que dans des zones partielles de la zone spatiale ayant une moindre susceptibilité aux oscillations de la partie de machine (41) sont prédéfinies.

2. Procédé selon la revendication précédente, la partie de machine (41), vue à partir d'un support (17) de la partie de machine (41), pouvant être positionnée à une distance (x) différente, et l'accélération maximale et/ou la saccade maximale étant prédéterminée(s) de manière à ce qu'elle(s) varie(nt) en fonction de la distance.

3. Procédé selon l'une des revendications précédentes, le mouvement étant un mouvement lors duquel la partie de machine (41) est rapprochée d'une pièce d'œuvre (15) afin d'entrer en contact avec la pièce d'œuvre (15), le mouvement présentant une phase de mouvement lors de laquelle la vitesse de la partie de machine (41) diminue.

4. Machine de mesure de coordonnées (11) ou machine-outil, avec une partie de machine (41) mobile et avec une commande (14), laquelle est conçue pour commander un mouvement de la partie de machine (41) de manière à ce que, lors du mouvement de la partie de machine (41), une accélération maximale prédéterminée et/ou une saccade maximale prédéterminée ne soi(en)t pas dépassée(s), l'accélération maximale et/ou la saccade maximale variant en fonction de la position de la partie de machine (41) et/ou en fonction de l'orientation de la partie de machine à l'intérieur de la zone spatiale dans laquelle il est possible de faire bouger la partie de machine (41), à savoir de manière correspondant à une ligne caractéristique prédéterminée ou à un champ caractéristique prédéterminé de l'accélération maximale et/ou de la saccade maximale, et la ligne caractéristique ou le champ caractéristique définissant les valeurs de l'accélération maximale et/ou de la saccade maximale en tant que fonction de la position et/ou de l'orientation de la partie de machine (41), où, pour l'accélération maximale et/ou la saccade maximale (P) dans des zones partielles de la zone spatiale ayant une susceptibilité plus importante aux oscillations de la partie de machine (41), des valeurs plus petites que dans des zones partielles de la zone spatiale ayant une moindre susceptibilité aux oscillations de la partie de machine (41) sont prédéfinies.

5. Machine selon la revendication précédente, la partie de machine (41), vue à partir d'un support (17) de la partie de machine (41), pouvant être positionnée à une distance (x) différente et l'accélération maximale et/ou la saccade maximale étant prédéterminée(s) de manière à ce qu'elle(s) varie(nt) en fonction de la distance.

6. Machine selon l'une des deux revendications précédentes, le mouvement étant un mouvement lors duquel la partie de machine (41) est rapprochée d'une pièce d'œuvre (15) afin d'entrer en contact avec la pièce d'œuvre (15), et la commande (14) étant conçue de manière à ce que le mouvement présente une phase de mouvement lors de laquelle la vitesse de la partie de machine (41) diminue.
